# EUROPEAN PATENT SPECIFICATION

(11) **EP 1 692 207 B1**
(45) Date of publication and mention of the grant of the patent: **02.05.2018**
(21) Application number: 04811403.7
(22) Date of filing: 17.11.2004
(51) Int. Cl.: D01F 6/90, D01F 6/60, C08G 69/48, C08G 69/28, C08G 69/18, C08G 69/04, C08J 5/04

(54) **METHOD OF FORMING GEL-SPUN FIBERS**
VERFAHREN ZUR HERSTELLUNG VON GELGESPONNENEN FASERN
MÉTHODE DE FABRICATION DE FIBRES FILÉES À L'ÉTAT DE GEL

(30) Priority: 18.11.2003 US 523403 P
(43) Date of publication of application: 23.08.2006
(60) Divisional application: 10184956.0
(73) Proprietor: AdvanSix Resins & Chemicals LLC, Parsippanny, NJ 07054 (US)
(72) Inventor: KWEEDER, James, A., Chesterfield, VA 23832 (US)
(74) Representative: Crooks, Elizabeth Caroline
(86) International application number: PCT/US2004/038686
(87) International publication number: WO 2005/049694

(56) References cited:
- WO-A-01/53382
- WO-A1-2005/049720
- WO-A1-2005/049721
- GB-A- 773 569
- JP-A- S6 241 315
- RU-C1- 2 072 369
- US-A- 3 372 137
- PATENT ABSTRACTS OF JAPAN vol. 011, no. 229 (C-436), 25 July 1987 (1987-07-25) & JP 62 041315 A (TORAY MONOFILAMENT CO LTD), 23 February 1987 (1987-02-23)
- PATENT ABSTRACTS OF JAPAN vol. 012, no. 015 (C-469), 16 January 1988 (1988-01-16) & JP 62 170515 A (TORAY MONOFILAMENT CO LTD), 27 July 1987 (1987-07-27)
- HYOUNGSAN KYE ET AL: "Continuous polymerization of caprolactam in a twin screw extruder on-line blending and melt spinning to form blend fibers" CONFERENCE PROCEEDINGS ANTEC 94, vol. I, 1994, pages 116-122, XP009045148 cited in the application
- HORNSBY P.R. ET AL: "Characterization of polyamide 6 synthesised in a twin-screw extruder" CONFERENCE PROCEEDINGS ANTEC 93, vol. I, 1993, pages 470-473, XP009045149 cited in the application
- PATENT ABSTRACTS OF JAPAN vol. 014, no. 115 (C-0696), 5 March 1990 (1990-03-05) & JP 01 315463 A (ASAHI CHEM IND CO LTD), 20 December 1989 (1989-12-20)
- PATENT ABSTRACTS OF JAPAN vol. 014, no. 115 (C-0696), 5 March 1990 (1990-03-05) & JP 01 315464 A (ASAHI CHEM IND CO LTD), 20 December 1989 (1989-12-20)

## Description

### FIELD OF THE SUBJECT MATTER

The field of the subject matter herein is composite materials, including fiber products and yarn products, produced from polymerizable materials and polymerized pre-fiber gel materials, fiber materials and compositions, methods of manufacture and uses thereof.

### BACKGROUND

Fibers for consumer use, products that use those fibers and the constituents that make up those fibers, especially fibers and polymers that are incorporated into carpet products and fabrics/textiles, are constantly being evaluated for improvements with respect to the durability and strength. These improvements may relate to tensile strength and tensile properties, quality, durability. Fibers and fiber products are also being evaluated to determine if there are more efficient and cost-effective manufacturing processes and equipment.

Most polymer processing does not only shape polymer into the desired shape (eg: injection molding, film blowing, fiber spinning). The processing is usually designed to impart desirable properties to the finished article by manipulation of the polymer molecules during the forming operation. For example, film blowing is carefully designed to combine the proper degree of stretching during the cooling of the molten polymer. This stretching orients the
polymers improving strength and toughness of the film. Fiber is drawn during the cooling stage to control the degree of crystallization in the finished yarn.

Simple melt processing of polymers has distinct limitations. Since the manipulation is carried out during the brief period of solidification, practical limitations exist on how much molecular orientation can be achieved and/or how much shape manipulation can be realized before the polymer is too cool to accomplish either. To be processed, the polymer must melt, the molecules freed-up for orientation, but still be sufficiently viscous and cohesive to hold together in the processing (a concept commonly called "melt strength"). These requirements restrict the molecular weights of the polymer that can be employed.

To overcome the restrictions imposed by the brief period of solidification, the polymer can be alternatively treated with a solvent material to produce a physical state that is in ways similar to the period during solidification. The polymer can be processed during that period to impart properties and/or shapes not achievable from simple melt processing. Gel-spun polyethylene has been exploited for the production of ballistic fibers.

Another method of improving fibers and fiber products is to produce polymer composites. Polymer composites are commonly manufactured for various reasons. Composites
can be as simple of the addition of chopped fiberglass to a suitable polymer. Composites can be more elaborate with carefully woven and wrapped fiber constructs embedded in polymer matrix. In either extreme, the objective is to produce a suitable light-weight polymer part with the desired bulk and area-specific properties not obtainable with the matrix polymer alone.

However, the primary challenge to manufacturing polymer composite components is to achieve sufficient adhesion between the fiber reinforcement and the matrix polymer. Some systems (like fiberglass filled polyester) achieve sufficient adhesion for the purpose it is employed. Typically, however, good adhesion is more difficult. In high performance constructs (in aerospace particularly), small flaws in the adhesion create stress concentrations that reduce the toughness and strength of the construct. In other systems, the reinforcement and the polymer matrix is so dissimilar that adhesion is difficult to create at all.

Various steps are taken to overcome this challenge. Chemical adhesion promoters are coated onto the reinforcement (as is universally done on polyester tire cord to bond it to the rubber matrix). Also, the part can be subjected to compressive force during the cure to promote the adhesive bond. While effective, these measures have limitations. Chemical coatings are not always available for a particular system. Coating is tricky as the proper amount must be evenly applied to the reinforcement. Further, chemical treatments require that the treated reinforcement be kept free from contamination to preserve the effect of the treatment.

Compression has its own challenges. Large parts require large devices to press the part for curing. The amount of compressive force that can be applied is limited by the tendency for the molten polymer to squeeze out from between the press. The modest force that can be employed limits the thickness of the part that can be well-bonded.

In addition to the challenges of making reinforced composites, there are practical size limitations of melt processing polymer parts. Molding and extrusion of polymer shapes is economical. However, the size of a molded or extruded part is limited by the rate at which molten polymer can be delivered. Because polymer degrades at its melting temperature, large batches of polymer can not be pre-melted and then forced into shapes in a similar fashion as casting or rolling metal. Polymer melt processing is carried out typically with extruders wherein the polymer is melted, quickly shaped, and then cooled before excessive thermal degradation reduces the physical properties of the polymer.

One technique to overcome this limitation is to chemically create the polymer inside a mold. Reactive casting of thermoset polymers is as old as the polymer industry. Phenol-fonnaldehyde (i.e. Bakelite) castings go back about 100 years. Thermosets are particularly suited for this application as the components polymerize readily as a chemical reaction.

Utilizing thermoplastics in this manner is much more difficult. Most thermoplastics do not polymerize by mixing reactive chemicals. Rather, many are polymerized from a single monomer usually requiring exacting conditions to achieve polymerization and proper molecular weight. Even bi-component thermoplastics like polyester and nylon-6,6 require controlled conditions for polymerization to properly proceed.

One example of reactive casting of thermoplastics is the anionic polymerization of caprolactam into nylon-6. Specially prepared caprolactam can be polymerized in a mold with the addition of a catalyst. In this manner, nylon-6 parts of size and cross-section difficult or impossible to obtain from melt processing are now commercially available.

The inherent disadvantage of reactive casting is that properties created during melt-forming operations are just not possible. Molecular orientation can not be achieved by, drawing of a cooling melt. An obvious avenue to added properties (particularly directional or localized) is to combine reactive casting with composite reinforcement.

Reactively cast composites face the same challenge of interface adhesion between the matrix and the reinforcement. However, the classic approaches of surface treatment and compression are unlikely to succeed. Since the casting material is liquid, compression during curing would be nearly impossible. Adhesion promoters could be employed, but now the promoter additionally needs to be compatible with the casting components and not interfere with the chemical reaction to make the matrix polymer.

Caprolactam and nylon compounds have each been individually polymerized with the same compounds (i.e. caprolactam/caprolactam or nylon/nylon) by anionic polymerization in a twin-screw extruder and then tested for residual monomer content and thermal/mechanical properties. In both methods, however, the polymerization process used was not designed to and did not result in a pre-fiber gel composition that could be processed by any means (including extrusion), and there was no indication that the mechanical strength or thermal strength was improved by the single monomer/twin-screw extruder mixing process, (see Antec '93 Conference Proceedings, New Orleans, 9th- 13th May 1993, Vol. 1, p. 470-473; and Antec '94 Conference Proceedings, San Francisco, CA, 1st-5th May 1994, Vol. 1, p. 116-22)

It was also known that caprolactam formed solutions with nylon-6, but these solutions took the form of residual, unpolymerized monomer found in the polymer. Typically nylon-6 resin is leached to remove this residual monomer. Deliberate addition of caprolactam for gel processing has not been previously considered.

Gel processing and gel compositions are important because polymer parts have a practical limit in cross-section size due to the difficulty in forming such large cross-sections via melt processing. From a practical perspective, machines (extruders) to form polymer into shapes and sizes routinely available in metal simply do not exist. The other real limitation is that as melted polymer cools, significant shrinkage occurs. One can often find puckers on molded parts from shrink. To an extent, shrink can be compensated with clever mold design and tuning the molding process. This size/cross-section limitation applies to reinforced composites with the additional limit that compressive force (if used to promote adhesion) also is a limiting factor in cross-section. This information taken together shows that it is difficult to make polymer parts of large cross-section and particularly difficult to make fiber reinforced polymer parts of large cross-section.

Also, while polymer parts having large cross-sections can be made via reactive molding, the resulting parts are just bulk polymer without the property benefits that could be achievable with melt-processing. Therefore, given the limitations with current practice, it would be particularly advantageous to combine fiber reinforcement with reactive molding to achieve polymer constructs of unusually large cross-section but still with tailored properties not achievable with reactive molding alone.

Once a suitable system for gel processing monomer and polymer-based products, such as nylon-based products, is discovered and utilized, it should be investigated with respect to the formation of composite materials that comprise a reinforcement component (usually a fiber, yam or mat base) and a matrix component (usually a polymer). Traditionally, many applications try to blend a matrix component and a reinforcement component to form a strengthened composite material; however, significant problems arise when the matrix component and the reinforcement component are not entirely compatible. For example, in those situations where the matrix component and the reinforcement component are not compatible, adhesion between the matrix component and the reinforcement component can be significantly compromised in the short-term, the long-term or both.

Therefore, it would be desirable to produce a composite material having a) good compatibility between the matrix component and the reinforcement component; b) good initial adhesion between the matrix component and the reinforcement component; and c) good long-term adhesion between the matrix component and the reinforcement component; and wherein the composite material can be formed by using a) a polymerizable and/or polymerized pre-fiber and fiber gel material and/or composition that 1) has sufficient viscosity and suitable cohesiveness such that it can be spun into a fiber or yarn, 2) can be processed by any processing method, including extrusion, 3) can be formed that at or below normal processing temperatures for a fiber product or wherein the composite material can be formed by using b) conventional and readily available fiber and yarn products without initially utilizing a pre-fiber or fiber gel material.

WO 01/53382 discloses polyamide chain extension processes and relating polyamide product.

JP-S-6241315 and JP-S-62170515 disclose polyamide monofilaments.

### SUMMARY OF THE SUBJECT MATTER

A method of forming a gel-spun fiber is disclosed, the method consisting of the following steps:
(a) providing nylon-6 and caprolactam;
(b) reacting the caprolactam with the nylon-6 to form a pre-fiber nylon/caprolactam gel composition; and
(c) spinning said pre-fiber nylon/caprolactam gel composition on a twin-screw extruder fiber spinning machine to form a gel-spun fiber;
wherein reacting step (b) comprises mixing the caprolactam with the nylon-6; and
wherein the amount of caprolactam is 5 to 40 wt.% of the gel composition.

### DETAILED DESCRIPTION

As mentioned earlier, many applications attempt to blend a matrix component and a reinforcement component to form a strengthened composite material; however, significant problems arise when the matrix component and the reinforcement component are not entirely compatible. For example, in those situations where the matrix component and the reinforcement component are not compatible, adhesion between the matrix component and the reinforcement component can be significantly compromised in the short-term, the long-term or both.

To address this problem, a composite material has been developed and is described herein that has a) good compatibility between the matrix component and the reinforcement component; b) good initial adhesion between the matrix component and the reinforcement component; and c) good long-term adhesion between the matrix component and the reinforcement component. In addition, a nylon-based composite material may be formed by using either a) a polymerizable and/or polymerized pre-fiber or fiber gel material and/or composition that 1) has sufficient viscosity and suitable cohesiveness such that it can be spun into a fiber or yarn, 2) can be processed by any processing method, including extrusion, 3) can be formed that at or below normal processing temperatures for a fiber product; or b) it can be formed by using conventional and readily available fiber and yarn products as reinforcement components without initially utilizing a pre-fiber or fiber gel material.

Contemplated components are described herein and include: a matrix component precursor, a reinforcement component precursor, a composite component precursor, a matrix component, a reinforcement component and a composite component. It should be understood that in the case of the matrix component precursor, the reinforcement component precursor and the composite component precursor that those components are not considered to be in "final form", as contemplated herein. The phrase "final form", as contemplated herein, is the matrix component, the reinforcement component and the composite component, respectively.

Any reactive molding system, wherein the matrix component precursor will serve to form a useful gel in and/or on the pre-reinforcement component or reinforcement component, is suitable to form a composite material precursor and/or composite material. The composite materials precursor and/or composite materials are nylon-based composite materials. These composite materials, along with others described herein, comprise a matrix component and a reinforcement component, wherein both the matrix component and the reinforcement component comprise at least in part a monomer-based and/or polymer-based compound, and in the case of a nylon-based material, an amide- or polyamide-based compound. In addition, the composite material precursor may comprise a matrix component precursor, a reinforcement component precursor or a reinforcement component, at least one suitable solvent and at least one polymerization initiator. It should be understood that the composite material precursor will be treated and used to form the composite material.

The at least one amide-based compound and/or polyamide-based compound is the starting point for the formation of a composite material precursor and/or a composite material. As used herein, the term "compound" means a substance with constant composition that can be broken down into elements by chemical processes. Polyamides and polyamide-based compounds, as the name implies, are polymers that comprise amide monomers. Several polyamide-based compounds comprise nylon-based compositions, such as nylon-6.

Amides are an important group of nitrogenous compounds and monomers that are used as intermediates and/or building blocks in the production of polymers, textiles, plastics and adhesives. Amide monomers are generally represented by the following formula: 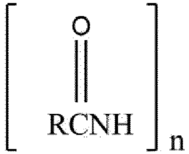 wherein R is an alkyl group, an aryl group, a cyclic alkyl group, an alkenyl group, an arylalkylene group, or any other appropriate group that can be utilized to be a part of an amide compound.

As used herein, the term "monomer" generally refers to any chemical compound that is capable of forming a covalent bond with itself or a chemically different compound in a repetitive manner. The repetitive bond formation between monomers may lead to a linear, branched, super-branched, or three-dimensional product. Furthermore, monomers may themselves comprise repetitive building blocks, and when polymerized the polymers formed from such monomers are then termed "block polymers". The weight-average molecular weight of monomers may vary greatly between 40 Dalton and 20000 Dalton. However, especially when monomers comprise repetitive building blocks, monomers may have even higher molecular weights. Monomers may also include additional groups, such as groups used for crosslinking, radiolabeling, and/or chemical or environmental protecting.

The term "alkyl" is used herein to mean a branched or a straight-chain saturated hydrocarbon group or substituent of 1 to 24 carbon atoms, such as methyl, ethyl, n-propyl, isopropyl, n-butyl, isobutyl, t-butyl, octyl, decyl, tetradecyl, hexadecyl, eicosyl and tetracosyl. In some embodiments, contemplated alkyl groups contain 1 to 12 carbon atoms. The term "cyclic alkyl" means an alkyl compound whose structure is characterized by one or more closed rings. The cyclic alkyl may be mono-, bi-, tri- or polycyclic depending on the number of rings present in the compound. The term "aryl" is used herein to mean a monocyclic aromatic species of 5 to 7 carbon atoms or a compound that is built with monocyclic aromatic species of 5 to 7 carbon atoms and is typically phenyl, naphthalyl, phenanthryl and anthracyl. Optionally, these groups are substituted with one to four, more preferably one to two alkyl, alkoxy, hydroxy, and/or nitro substituents.

The term "alkenyl" is used herein to mean a branched or a straight-chain hydrocarbon chain containing from 2 to 24 carbon atoms and at least one double bond. Preferred alkenyl groups herein contain 1 to 12 carbon atoms. The term "alkoxy" is used herein to mean an alkyl group bound through a single, terminal ether linkage; that is, an alkoxy group may be defined as -OR wherein R is an alkyl group, as defined above. The term "arylalkylene" is used herein to mean moieties containing both alkylene and monocyclic aryl species, typically containing less than 12 carbon atoms in the alkylene portion, and wherein the aryl substituent is bonded to the structure of interest through an alkylene linking group. Exemplary arylalkylene groups have the structure -(CH₂)i-Ar wherein "j" is an integer in the range of 1 to 6 and wherein "Ar" is an aryl species.

The polymer-based and/or monomer-based compound, at this point, may be utilized several different ways in order to form the matrix component precursor, the reinforcement component precursor, the composite material precursor, the composite material or a combination thereof. The amide- or polyamide-based compound may be
in the form of conventional and commercially available nylon products, such as nylon fibers, nylon yams or nylon mats. The nylon product - in whatever form - is formed at least in part to the structure that the composite material is going to assume. The nylon product in this case may be considered the "reinforcement component". In the case where the reinforcement component is provided, there is no need for a reinforcement component precursor
to be produced.

The matrix component is formed by covering, at least in part, the reinforcement component with a suitable solvent for nylon products, which is a lactam-based solvent, such as caprolactam or s-caprolactam. s-Caprolactam, also known as aminocaproic lactam and 2-oxohexamethyleneimine, is a compound that is produced in flake and molten forms and is used primarily in the manufacture of nylon-6 products such as those products contemplated herein or other synthetic fibers, plastics, bristles, films, coatings, synthetic leathers, plasticizers and paint vehicles. Caprolactam can also be used as a cross-linking agent for polyurethanes and in the synthesis of the amino acid lysine. A contemplated lactam preparation method is shown herein in Example 1.

Amides, such as caprolactam, can also be produced by reacting a ketone with hydroxylamine to make an oxime, and then using an acid catalyzed rearrangement of the oxime(s), conventionally called the Beckmann rearrangement, to form the amide. Merchant quality caprolactam can be produced by methods described in US 2004/0059108 (US Patent Application Serial No.: 10/251335 filed on September 21, 2002, which is commonly owned).

The reinforcement component is allowed to sit in the solvent for a period of time in order to at least partially "gel" the surface of the nylon product. The partially gelled surface of the nylon product is considered the matrix component precursor. At this point, a catalyst is added to the reinforcement component-matrix component precursor mixture that induces anionic polymerization of the lactam solvent-gel mixture (the matrix component precursor) to form the matrix component. Contemplated catalyst includes n-butyl lithium, but other catalyst for anionic polymerization of caprolactam is documented in the literature. Any remaining solvent is removed by any suitable and conventional apparatus and/or methods, thus forming a contemplated composite material. Excellent adhesion is achieved between the reinforcement component and the matrix component at least in part because of a "cross polymerization" between the reinforcement component and the matrix component. In other words, not only is the caprolactam solvent anionically polymerized, but the caprolactam solvent is polymerized with the surface gel component (the matrix component precursor) of the reinforcement component.

It should be understood that the gelling agent and/or the catalyst can enable at least part of the reinforcement component to bond to or couple with at least part of the matrix component. In some embodiments, at least one of the gelling agent or the catalyst is added to at least part of the reinforcement component and the matrix component in order to form a pre-fiber gel composition, a composite material precursor and/or a composite material. In some embodiments, forming a pre-fiber gel composition, a composite material precursor and/or a composite material comprises forming chemical, such as covalent, ionic or hydrogen and/or physical, such as adhesion, bonds between at least some of the reinforcement component and at least part of the matrix component precursor or the matrix component.

In another contemplated embodiment, the reinforcement component is formed by using a polymerizable and/or polymerized pre-fiber gel composition and/or material that allows for the control of the properties of the drawn fiber by allowing for more favorable orientation of the polymer molecules in the fiber. Controlling the molecule orientation can lead to increased tensile strength and overall fiber durability. Once the gel-spun fiber is formed, it can be processed into a yarn or other suitable textile to become the reinforcement component.

In order to produce a polymerizable pre-fiber gel composition and/or material that can be formed into a gel spun fiber and ultimately into a reinforcement component, a contemplated polymerizable pre-fiber gel composition includes: a) at least one polymer and/or monomer-based composition; and b) at least one compatible gelling agent, wherein the at least one gelling agent chemically or physically reacts with the at least one polymer-based composition, monomer-based composition or combination thereof to form the pre-fiber gel composition. In addition, to produce a polymerized gel spun composition and/or material, a contemplated polymerized fiber gel-spun composition includes: a) a pre-fiber gel composition, such as that described herein; and b) at least one additional compatible gelling or polymerization agent, such as a catalyst.

Furthermore, at least part of the at least one compatible gelling agent and/or the at least one additional compatible gelling or polymerization agent can be removed and recovered from the spun fiber once formed. In addition, any unpolymerized monomers can be subsequently polymerized after further processing to create properties in the spun fiber that are difficult or impossible to achieve with conventional spun polymers. Formation of the pre-fiber gel composition technique is also described in commonly-owned US Utility Application entitled "Pre-fiber Gel Materials and Compositions, Methods of Manufacture and Uses Thereof (US 2005/0119376; Serial No. 10/716584) that has been filed concurrently, is commonly owned.

At least one compatible gelling agent is provided that is mixed and/or blended with the at least one polymer and/or monomer-based compound in order to form a contemplated pre-fiber gel composition. The at least one compatible gelling agent may comprise a lactam gelling agent, such as a caprolactam like c-caprolactam.

The at least one compatible gelling agent may be added in any suitable weight percentage with respect to the other composition constituents, as long as the addition of the gelling agent aids in the production of a pre-fiber gel composition. In a contemplated embodiment, the at least one compatible gelling agent comprises less than 50 weight percent of the composition. In another contemplated embodiment, the at least one compatible gelling agent comprises less than 40 weight percent of the composition. In yet another contemplated embodiment, the at least one compatible gelling agent comprises less than 30 weight percent of the composition. In other contemplated embodiments, the at least one compatible gelling agent comprises less than 20 weight percent of the composition. In yet other contemplated embodiments, the at least one compatible gelling agent comprises less than 10 weight percent of the composition. Also, in some contemplated embodiments, the at least one compatible gelling agent comprises less than 5 weight percent of the composition.

There are several issues to consider as to whether caprolactam/nylon-6 gels would be useful, including that they need a suitable viscosity and melt strength for processing. Unexpectedly suitable gels can be prepared over a wide range of concentrations from below 5 wt.% caprolactam to at least 50 wt.%. These gels proved remarkably easy to spin into fibers on conventional melt-spinning equipment and at drawing/take-up speeds comparable to commercial melt spinning. Gel polymers can be processed at lower temperatures than simple, neat melts. This feature can be exploited to process higher molecular weight nylon-6 without undue increases in operating temperatures.

More significantly, the melt strength was unexpectedly good (exhibited by the ability to spin gel at high speed) over the wide range of both caprolactam concentration and processing temperature (from significantly below the normal melt processing temperature to well above it). In many ways, the nylon gel has superior processibility over plain melted nylon. This is in contrast to gel spun polyethylene were the gel must be spun at low linear speed prior to removal of the solvent.

The unexpectedly good processibility of nylon/caprolactam gels provides greater flexibility in manufacturing products. The ability to spin the gel at high speeds suggest that nylon gel products can be manufactured with productivity comparable to melt processing. The excellent melt strength of the gels also allow the polymer to be highly shaped or drawn prior to
solvent removal; or, only lightly processed, the caprolactam removed, and then post-processed to achieved the desired combination of properties.

The caprolactam itself has advantages as a gelling agent. It is relatively inexpensive, low volatility, and non-hazardous with favorable industrial hygiene properties. The caprolactam can be extracted from the polymer with water and then easily recovered for re-use.

Once the reinforcement component that comprises at least one gel-spun fiber is formed, at least two different paths can be taken to form the composite material. One contemplated path is to form the composite material similar to that suggested above for conventional polymer and/or monomer-based products, and that is to at least partially cover the reinforcement component with a suitable solvent for the polymer and/or monomer-based products, which - in the case of a nylon-based polymer - is a lactam-based solvent, such as caprolactam or s-caprolactam. The reinforcement component is allowed to sit in the solvent for a period of time in order to at least partially "gel" the surface of the polymer and/or monomer-based product. At this point, a catalyst is added to the reinforcement component-solvent mixture that induces anionic polymerization of the solvent-gel mixture to form the matrix component. Any remaining
solvent is removed by any suitable and conventional apparatus and/or methods, thus forming a contemplated composite material. Again, excellent adhesion is achieved between the reinforcement component and the matrix component at least in part because of the "cross polymerization" between the reinforcement component and the matrix component.

In another contemplated path, the reinforcement component is at least partially covered with the pre-fiber gel composition already described herein. The reinforcement component-pre-fiber gel composition is allowed to sit for a period of time and then is treated to form the composite material: Treating the reinforcement component-pre-fiber gel composition may include adding additional catalysts to induce further anionic polymerization or merely drying/curing the mixture to form the composite material.

As mentioned, during or after the formation of contemplated reinforcement materials, reinforcement material precursors, matrix materials, matrix material precursors, composite material precursors, composite materials and/or yarn products, a thermal energy may be applied to the materials and/or products, wherein the thermal energy comprises a temperature that is at or above the melting point of the constituents, the fiber and/or other heat-active components. The thermal energy can be applied to activate at least some of the plurality of fibers. In some embodiments, activating the fibers comprises forming chemical, such as covalent, ionic or hydrogen and/or physical, such as adhesion, bonds between at least some of the plurality of fibers and at least one of the other components.

The thermal energy may come from any suitable source, including extended/non-point sources, such as a UV-VIS source, an infra-red source, a heat source, both radiative and convective, or a microwave source; or electron sources, such as electron guns or plasma sources. Other suitable energy sources include electron beams, and radiative devices at non-IR wavelengths including x-ray, and gamma ray. Still other suitable energy sources include
vibrational sources such as microwave transmitters. In preferred embodiments, the energy source is an extended source. In more preferred embodiments, the energy source is a heat source.

It should be understood that the thermal energy may be applied consistently or in short bursts. It is also contemplated that the thermal energy may be gradually and continuously applied over a temperature range until the thermal energy is at or above the melting point of the fiber or other heat-active components. The thermal energy may also be immediately applied at or above the melting point of any of the heat-active components without any ramp time.

Methods of forming a pre-fiber gel composition, a reinforcement component, a fiber, a composite material precursor and a composite material are also described and contemplated herein. A method of forming a pre-fiber gel composition includes: a) providing at least one polymer-based composition, monomer-based composition or combination thereof; b) providing at least one compatible gelling agent; and c) contacting at least part of the at least one polymer-based composition, monomer-based composition or combination thereof with the at least one compatible gelling agent, such that the at least one gelling agent chemically or physically reacts with the at least one polymer-based composition, monomer-based composition or combination thereof to faun the pre-fiber gel composition. At least one reinforcement component and/or fiber can be formed by utilizing the method of forming the pre-fiber gel composition previously described.

Methods of forming composite material precursors include: a) providing a matrix component precursor; b) providing a reinforcement component; and c) contacting the reinforcement component with the matrix component precursor, wherein the combination of the matrix component precursor and the reinforcement component form the composite material precursor. Composite materials can be formed by utilizing the method of forming the composite material precursor.

The at least one polymer-based composition, monomer-based composition or combination thereof, the at least one compatible gelling agent, the reinforcement component and/or the matrix component precursor may be provided by any suitable method, including a) buying the at least one polymer-based composition, monomer-based composition or combination
thereof, the at least one compatible gelling agent, the reinforcement component and/or the matrix component precursor from a supplier or textile mill; b) preparing or producing the at least one polymer-based composition, monomer-based composition or combination thereof, the at least one compatible gelling agent, the reinforcement component and/or the matrix component precursor in house using chemicals provided by another source and/or c) preparing or producing the at least one polymer-based composition, monomer-based composition or combination thereof, the at least one compatible gelling agent, the reinforcement component and/or the matrix component precursor in house using chemicals also produced or provided in house or at the location. It is contemplated that the at least one polymer-based composition, monomer-based composition or combination thereof, the at least one compatible gelling agent, the reinforcement component and/or the matrix component precursor are made of any suitable material, such as those materials already described herein.

With respect to the methods described herein, the term "contacting" means putting the components in close proximity to one another such that at least one of the components comes into physical contact, at least in part, with at least one other component.

The reinforcement materials, reinforcement material precursors, matrix materials, matrix material precursors, composite material precursors, composite materials contemplated are used to form a spun fiber product.

### EXAMPLES

The reinforcement materials, reinforcement material precursors, matrix materials, matrix material precursors, composite material precursors, composite materials, yarn products and methods used to produce those materials and products, as described in the examples, are for illustrative purpose only and should not, in any way, limit the scope of this invention.

### REFERENCE EXAMPLE 1 - LACTAM PREPARATION

Four liters of caprolactam were melted in a convection oven overnight in a covered container. The lactam was poured into a 5L 3-necked distillation flask with a magnetic stir bar and an electric heating mantle (top and bottom mantles). The distillation column was vacuum jacketed by a 29/42 column and a 10 tray section, a 5 tray section, a splitting distillation head and a condenser. The condenser was held at 50°C with a heated water circulator. The system had the pressure reduced from 7 mm Hg to 4 mm Hg. Heat was applied and the column was brought to reflux conditions and held for 30 minutes. After 30 minutes for the column to stabilize, the distillation head splitter was activated with a 4 second take off and a 10 second reflux. Slightly less than 1 liter of lactam was distilled off. The heat was turned off and the mantles were removed allowing the lactam in the 5-liter flask to drop to 90°C before breaking the vacuum on the system. The 5-liter flask was removed and the lactam was poured into 1-liter Nalgene beakers and promptly placed into a glove box with a dry nitrogen atmosphere. After cooling overnight, the crystal lactam was transferred to plastic bags and was broken into flake form with a hammer inside the glove box. The lactam was stored inside the dry glove box under house nitrogen until needed for the pre-fiber gel composition-formation.

### EXAMPLE 2 - PRE-FIBER GEL COMPOSITION FORMATION

Nylon-6 was ground to a fine powder and mixed with a lactam gelling agent, which was in this case - caprolactam. A Braybender mixer was used to mix the nylon and caprolactam at a speed of 60 RPM. Addition time took about 5 minutes and the gel was allowed to mix for 15 minutes after charging at the temperature indicated. The samples were removed while the Braybender was running with a brass wipe stick. The samples were then ground in a Willey mill using a course screen. A weighted amount of each ground gel mix was extracted 16+ hours using a jacketed soxlet extractor. The extract was filtered using a folded #54 paper and rinsed into a 100 mL volumetric flask. The extract was brought to volume with deionized water and then analyzed by Gas Chromatography for % lactam using a Carbowax column.

| GEL MIX | **BRAYBENDER** TEMPERATURE | WEIGHT EXTRACTED | VOLUME | % LACTAM IN EXTRACT | % LACTAM IN GEL BY **GC** |
|---|---|---|---|---|---|
| 5% Lactam | 225 | 8.9041 | 100 | 0.2867 | 3.22 |
| 10% Lactam | 220 | 9.0031 | 100 | 0.4204 | 4.67 |
| 15% Lactam | 215 | 9.7892 | 100 | 0.9114 | 9.31 |
| 20% Lactam | 210 | 8.6867 | 100 | 0.966 | 11.12 |
| 30% Lactam | 205 | 8.7811 | 100 | 1.8124 | 20.64 |
| 40% Lactam | 194 | 7.6208 | 100 | 2.3396 | 30.7 |

The resulting gels were gel spun on a twin-screw extruder fiber spinning machine. The gels spun into a fiber product surprisingly well and packages of fiber were able to be prepared at most conventional spinning conditions. Furthermore, it was observed that extruder temperature could be dropped below conventional conditions for neat polymers, given that the gel compositions allowed for lower extruder pressures. **Tables 1-5,** shown below, give summaries of several of the experimental and spinning conditions utilized in these Examples.

Thus, specific embodiments and applications of reinforcement materials, reinforcement material precursors, matrix materials, matrix material precursors, composite material precursors, composite materials, their manufacture and uses thereof have been disclosed. It should be apparent, however, to those skilled in the art that many more modifications besides those already described are possible without departing from the inventive concepts herein. Moreover, in interpreting the disclosure, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

**Table 1**

| **Nylon Gel Spinning :** | | | | |
|---|---|---|---|---|
| RXT-2 UNIT | | | | |
| CHANGE NUMBERS WHERE IT IS BLUE COLOR | | | | |
| MINIMUM PUMP RPM | 8 | | | |
| MAXIMUM PUMP RPM | 40 | | | |
| PUMP SIZE(CC/REV.) | 1.16 | | | |
| NUMBER OF FILAMENTS | 14 | | | |
| PUMP SPEED(RPM) | 19.7 | | | |
| POLYMER DENSITY(GM/CC) | 0.98 | | | |
| THRU-PUT (LBS/HR) | 2.95969 | THRU-PUT (Kg/HR) | 1.3425 | |
| THRU-PUT PER FIL (LBS/HR) | 0.21141 | THRU-PUT PER FIL (GMS/MIN) | 1.5982 | |
| THRU-PUT(GMS/MIN) | 22.395 | THRU-PUT(GMS/MIN) | 22.395 | |
| THRU-PUT PER FIL(GMS/MIN) | 1.59964 | | | |
| TAKE-UP SPEED (Meter/min) | 3000 | FROM FT/MIN TO M/MIN | 0.3048 | |
| DPF GMS @TAKE-UP ROLL (UNDRAWN) | 4.79892 | | | |
| DTEX PER FIL GMS @TAKE-UP ROLL (UNDRAWN) | 5.33213 | | | |
| FIL DIAMETER, MICRONS (UNDRAWN) | 22.1859 | | 22.186 | |
| FIL DIAMETER, mm (UNDRAWN) | 0.02219 | | | |
| TAKE-UP SPEED (FEET/min) | 9842.52 | TAKE-UP SPEED (meter/min) | 3000 | |
| Spinnerette | diameter | length | L/D | AREA |
| INCH | 0.03 | 0.09 | 3 | 0.0007065 |
| CM | 0.0762 | 0.2286 | 3 | 0.00455806 |
| YARN DENIER @TAKE-UP ROLL (GMS) | 67.1849 | | | |
| FLOW RATE(CC/MIN) | 22.852 | | | |
| JET VELOCITY (CM/MIN) | 5013.54 | | | |
| JET VELOCITY (meter/MIN) | 50.1354 | DR @ (TAKE-UP ROLL) | | 59.8379407 |
| SPIN. CAPILLARY RADIUS (FT) | 0.0025 | SPIN. CAPILLARY RADIUS (cm) | 0.076 | |
| SPIN. CAPILLARY LENGTH (FT) | 0.0075 | SPIN. CAPILLARY RADIUS (cm) | 0.239 | |
| THRU-PUT PER FIL(LBs/HR) | 0.21141 | THRU-PUT PER FIL (Kg/HR) | 0.09589 | |
| DENSITY(LBs/FT³) | 61.1814 | DENSITY (Kg/M³) | 980 | |
| FLOW RATE(FT³/SEC.) | 9.6E-07 | FLOW RATE (M³/hr) | 9.8E-5 | |
| VISCOSITY (POISE) | 3143.9 | VISCOSITY (Pa.s) | 314.4 | |
| VISCOSITY (LBf.SEC/FT²) | 6.56634 | VISCOSITY (Pa.s) | 314.4 | |
| DELTA PRESSURE (PSI) | 21.4101 | DELTA PRESSURE (MPa) | 0.148 | |
| **Stack Draw (calc. From sprt hole dia. And fil dia.)** | 34.3462 | | | |
| FINAL REQUIRE DENIER AFTER DRAWIN | 10 | | | |
| DRAWING DRAW RATIO | 0.47989 | | | |

**Table 2**

| Sample I.D. | Starting Conditions | #1 | #2 | #3 | #4 | #5 | #6 | #7 | #8 |
|---|---|---|---|---|---|---|---|---|---|
| POLYMER TYPE | MBM | MBM | | MBM 10% Lactam | MBM 10% Lactam | MBM 10% Lactam | MBM 10% Lactam | MBM 10% Lactam | MBM 10% Lactam |
| Feeder Setting | 2.96 | 2.96 | 2.96 | 2.96 | 2.96 | 2.96 | 2.96 | 2.96 | 2.96 |
| Date | 10/23/02 | 10/23/02 | 10/23/02 | 10/23/02 | 10/23/02 | 10/23/02 | 10/23/02 | 10/23/02 | 10/23/02 |
| water on feeding zone | on | on | on | on | on | on | on | on | on |
| zone 1 Temp. (deg c) | 245 | 270 | 250 | 250 | 245 | 240 | 235 | 230 | 225 |
| zone 2 Temp. (deg c) | 245 | 280 | 250 | 250 | 245 | 240 | 235 | 230 | 225 |
| zone 3 Temp. (deg c) | 245 | 280 | 250 | 250 | 245 | 240 | 235 | 238 | 225 |
| zone 4 Temp. (deg c) | 245 | 280 | 250 | 250 | 245 | 240 | 235 | 230 | 225 |
| zone 5 Temp. (deg c) | 245 | 280 | 250 | 250 | 245 | 240 | 235 | 230 | 225 |
| zone 6 Temp. (deg c) | 245 | 280 | 250 | 250 | 245 | 240 | 235 | 230 | 225 |
| zone 7 Temp. (deg c) | 245 | 280 | 250 | 250 | 245 | 240 | 235 | 230 | 225 |
| 8 Connecting Plate Temp. (deg. C) | 245 | 280 | 250 | 250 | 245 | 240 | 235 | 230 | 225 |
| 9 Block Temp. (deg.C) | 245 | 280 | 250 | 250 | 245 | 240 | 235 | 230 | 226 |
| 10 Spin Pump Temp. (deg.C) | 245 | 280 | 250 | 250 | 245 | 240 | 235 | 230 | 225 |
| 11 Top Cap (deg.C) | 245 | 280 | 250 | 250 | 245 | 240 | 235 | 230 | 230 |
| 12 Spin PackTemp. (deg.C) | 245 | 280 | 250 | 250 | 245 | 240 | 235 | 230 | 225 |
| Barrel Melt Temp. (deg. c) | 252 | 288 | 256 | 257 | 251 | 246 | 240 | 235 | 231 |
| Melt Pump Inlet Pressure (psi) | ???? | 420 | 10 | 200 | 10 | 10 | 10 | 10 | 10 |
| Melt Pump Inlet Pressure (MPa) | ???? | 2.90 | 0.07 | 1.38 | 0.07 | 0.07 | 0.07 | 0.07 | 0.07 |
| Melt Pump Outlet Pressure (psi) | ???? | 200 | 470 | 250 | 250 | 310 | 260 | 360 | 400 |
| Melt Pump Outlet Pressure (MPa) | ???? | 1.38 | 3.24 | 1.72 | 1.72 | 2.14 | 1.79 | 2.48 | 2.76 |
| Extruder (rpm) | 200 | 200 | 200 | 200 | 200 | 200 | 200 | 200 | 200 |
| Spinneret: no. of holes / Shape | 14 R | 14 R | 14 R | .024 | 14 R | 14 R | 14 R | 14 R | 14 R |
| Spinneret: capillary diameter & depth | .024 X 0.072 | .024 X 0.072 | .024 X 0.072 | .024 X 0.072 | .024 X 0.072 | .024 X 0.072 | .024 X 0.072 | .024 X 0.072 | .024 X 0.072 |
| Metering pump size (cc/rev) | 1.16 | 1.16 | 1.16 | 1.16 | 1.16 | 1.16 | 1.16 | 1.16 | 1.16 |
| Metering pump (rpm) | 16.7 | 19.3 | 19.8 | 19.8 | 19.8 | 19.8 | 19.7 | 19.7 | 19.7 |
| Thruput (lbs/hr) | 2.97 | 2.97 | 2.97 | 2.97 | 2.97 | 2.97 | 2.97 | 2.97 | 2.97 |
| Thruput (Kg/hr) | 1.35 | 1.35 | 1.35 | 1.35 | 1.35 | 1.35 | 1.35 | 1.35 | 1.35 |
| Filter type | STD SCREEN | STD SCREEN | STD SCREEN | STD SCREEN | STD SCREEN | STD SCREEN | STD SCREEN | STD SCREEN | STD SCREEN |
| Quench air Flow rate (CF/M) | 14.2 | 14.2 | 14.2 | 14.2 | 14.2 | 14.2 | 15.5 | 15.9 | 14.9 |
| Quench air Temp. (deg. c) | 19 | 19 | 19 | 19 | 19 | 19 | 19.3 | 19.6 | 19.7 |
| Quench air Humidity % | 40.8 | 40.8 | 40.8 | 40.8 | 40.8 | 40.8 | 39.8 | 39.5 | 39 |
| % Torque | 70 | 25 | 29 | 22 | 20 | 21 | 20 | 24 | 24 |
| Nitrogen In Hoper | 3 | 3 | 3 | 3 | 3 | 3 | 3 | 3 | 3 |
| Need: polymer chips moisture | Yes | | | | | | | yes | |
| Need : Free fall samples for FAV, COOH | Yes | Yes | Yes | Yes | Yes | Yes | Yes | | |

**Table 3**

| Sample I.D. | #9 | #10 | #11 | #12 | #13 | #14 | #15 | #16 | #17 |
|---|---|---|---|---|---|---|---|---|---|
| POLYMER TYPE | BHS | BHS 10% Lactam | BHS 10% Lactam | BHS 10% Lactam | BHS 10% Lactam | BHS 10% Lactam | BHS 10% Lactam | 135 | 135 10% Lactam |
| Feeder Setting | 2.96 | 2.96 | 2.96 | 2.96 | 2.96 | 2.96 | 2.96 | 2.96 | 2.96 |
| water on feeding zone | on | on | on | on | on | on | on | on | on |
| zone 1 Temp. (deg c) | 252 | 252 | 247 | 242 | 237 | 232 | 227 | 260 | 260 |
| zone 2 Temp. (deg c) | 252 | 252 | 247 | 242 | 237 | 232 | 227 | 260 | 260 |
| zone 3 Temp. (deg c) | 252 | 252 | 247 | 242 | 237 | 232 | 227 | 260 | 260 |
| zone 4 Temp. (deg c) | 252 | 252 | 247 | 242 | 237 | 232 | 227 | 260 | 260 |
| zone 5 Temp. (deg c) | 252 | 252 | 247 | 242 | 237 | 230 | 227 | 260 | 26 |
| zone 6 Temp. (deg c) | 252 | 253 | 247 | 242 | 237 | 232 | 227 | 260 | 260 |
| zone 7 Temp. (deg c) | 252 | 252 | 247 | 242 | 237 | 232 | 227 | 260 | 260 |
| 8 Connecting Plate Temp. (deg. C) | 252 | 252 | 247 | 242 | 237 | 232 | 227 | 260 | 260 |
| 9 Block Temp. (deg.C) | 252 | 252 | 247 | 242 | 237 | 232 | 227 | 260 | 260 |
| 10 Spin Pump Temp. (deg.C) | 252 | 252 | 247 | 242 | 237 | 232 | 227 | 260 | 260 |
| 11 Top Cap (deg.C) | 252 | 252 | 247 | 242 | 237 | 232 | 227 | 260 | 260 |
| 12 Spin Pack Temp. (deg.C) | 252 | 252 | 247 | 242 | 237 | 232 | 227 | 260 | 260 |
| Barrel Melt Temp. (deg. c) | 259 | 260 | 254 | 249 | 245 | 240 | 235 | 270 | 269 |
| Melt Pump Inlet Pressure (psi) | 40 | 90 | 250 | 280 | 180 | 50 | 70 | 1200 | 300 |
| Melt Pump Inlet Pressure (MPa) | 0.28 | 0.62 | 1.72 | 1.93 | 1.24 | 0.34 | 0.48 | 8.27 | 2.07 |
| Melt Pump Outlet Pressure (psi) | 970 | 520 | 570 | 610 | 740 | 790 | 840 | 1600 | 1040 |
| Melt Pump Outlet Pressure (Mpa) | 6.69 | 3.59 | 3.93 | 4.21 | 5.10 | 5.45 | 5.79 | 11.03 | 7.17 |
| Extruder (rpm) | 200 | 200 | 200 | 200 | 200 | 200 | 200 | 200 | 200 |
| Spinneret: no. of holes/Shape | 14 R | 14 R | 14 R | 14 R | 14 R | 14 R | 14 R | 14 R | 14 R |
| Spinneret: capillary diameter & depth | .024 X 0.072 | .024 X 0.072 | .024 X 0.072 | .024 X 0.072 | .024 X 0.072 | .024 X 0.072 | .024 X 0.072 | .024 X 0.072 | .024 X 0.072 |
| Metering pump size (cc/rev) | 1.16 | 1.16 | 1.16 | 1.16 | 1.16 | 1.16 | 1.16 | 1.16 | 1.16 |
| Metering pump (rpm) | 19.7 | 19.7 | 19.7 | 19.7 | 19.7 | 19.7 | 19.7 | 19.7 | 19.7 |
| Thruput (lbs/hr) | 2.97 | 2.97 | 2.97 | 2.97 | 2.97 | 2.97 | 2.97 | 2.97 | 2.97 |
| Thruput (Kg/hr) | 1.35 | 1.35 | 1.35 | 1.35 | 1.35 | 1.35 | 1.35 | 1.35 | 1.35 |
| Filter type | STD SCREEN | STD SCREEN | STD SCREEN | STD SCREEN | STD SCREEN | STD SCREEN | STD SCREEN | STD SCREEN | STD SCREEN |
| Monomer Exhaust Reading (inches water) | TBD | TBD | TBD | TBD | TBD | TBD | TBD | TBD | TBD |
| POLYMER TYPE | BHS | BHS 10% Lactam | BHS 10% Lactam | BHS 10% Lactam | BHS 10% Lactam | BHS 10% Lactam | BHS 10% Lactam | 135 | 135 10% Lactam |
| Quench air Flow rate (CF/M) | 14.6 | 14.5 | 14.6 | 14.9 | 15 | 14.6 | 14.9 | 14.5 | 15.1 |
| Quench air Temp. (deg. c) | 19.5 | 18.9 | 19.2 | 19.2 | 18.7 | 19 | 39.4 | 39.6 | 19.2 |
| Quench air Humidity % | 38.7 | 39.3 | 39.7 | 41.6 | 39.7 | 40.3 | 19.4 | 39.6 | 41.1 |
| % Torque Nitrogen in Hopar | 42 3 | 27 3 | 29 3 | 30 3 | 29 3 | 30 3 | 29 3 | 56 3 | 37 3 |

**Table 4**

| Sample I.D. | #18 | #19 | #20 | #21 | #22 | #23 | #24 | #25 | #26 |
|---|---|---|---|---|---|---|---|---|---|
| POLYMER TYPE | 135 10% Lactam | 135 10% Lactam | 135 10% Lactam | 135 10% Lactam | 135 10% Lactam | 135 10% Lactam | 135 10% Lactam | 195 | 195 10% Lactam |
| Feeder Setting | 2.96 | 2.96 | 2.96 | 2.96 | 2.98 | 2.96 | 2.96 | 2.96 | 2.96 |
| Dale | 10/24/02 | 10/24/02 | 10/24/02 | 10/24/02 | 10/24/02 | 10/24/02 | 10/24/02 | 10/24/02 | 10/24/02 |
| water on feeding zone | on | on | on | on | on | on | on | on | on |
| zone 1 Temp. (deg c) | 255 | 250 | 245 | 240 | 235 | 230 | 225 | 300/289 | 290/273 |
| zone 2 Temp. (deg c) | 255 | 250 | 245 | 240 | 235 | 230 | 225 | 300 | 290 |
| zone 3 Temp. (deg c) | 255 | 250 | 245 | 240 | 235 | 230 | 225 | 300 | 290 |
| zone 4 Temp. (deg c) | 255 | 250 | 245 | 240 | 235 | 230 | 225 | 300 | 290 |
| zom 5 Temp. (deg c) | 255 | 250 | 245 | 240 | 235 | 230 | 225 | 300 | 290 |
| zone 6 Temp. (deg c) | 255 | 250 | 245 | 240 | 235 | 230 | 225 | 300 | 290 |
| zone 7 Temp. (deg c) | 255 | 250 | 245 | 240 | 235 | 230 | 225 | 300 | 290 |
| 8 Connecting Plate Temp. (deg. C) | 255 | 260 | 245 | 240 | 235 | 230 | 225 | 300 | 290 |
| 9 Block Temp. (deg.C) | 255 | 250 | 245 | 240 | 235 | 230 | 225 | 300 | 290 |
| 10 Spin Pump Temp. (deg.C) | 255 | 250 | 245 | 240 | 235 | 230 | 225 | 300 | 290 |
| 11 Top Cap (deg.C) | 255 | 250 | 245 | 240 | 235 | 230 | 225 | 300 | 290 |
| 12 Spin Pack Temp. (deg.C) | 255 | 250 | 245 | 240 | 235 | 230 | 225 | 300/300 | 290 |
| Barrel Melt Temp. (deg. c) | 264 | 259 | 253 | 248 | 243 | 238 | 232 | 312 | 299 |
| Melt Pump Inlet Pressure (psi) | 630 | 470 | 450 | 630 | 600 | 580 | 190 | 1480 | 1080 |
| Melt Pump Inlet Pressure (MPa) | 4.34 | 3.24 | 3.10 | 4.34 | 4.14 | 4.00 | 1.31 | 10.2 | 7.45 |
| Melt Pump Outlet Pressure (psi) | 1080 | 1140 | 1260 | 1280 | 1330 | 1480 | 1700 | 1290 | 790 |
| Melt Pump Outlet Pressure (MPa) | 7.45 | 7.86 | 8.69 | 8.83 | 9.17 | 10.2 | 11.7 | 8.89 | 5.45 |
| Extruder (rpm) | 200 | 200 | 200 | 200 | 200 | 200 | 200 | 200 | 200 |
| Spinneret: no. of holes / Shape | 14 R | 14 R | 14 R | 14 R | 14 R | 14 R | 14 R | 14 R | 14 R |
| Spinneret: capillary diameter & depth | .024 X 0.072 | .024 X 0.072 | .024 X 0.072 | .024 X 0.072 | .024 X 0.072 | .024 X 0.072 | .024 X 0.072 | .024 X 0.072 | .024 X 0.072 |
| Metering pump size (cc/rev) | 1.16 | 1.16 | 1.16 | 1.16 | 1.16 | 1.16 | 1.16 | 1.16 | 1.16 |
| Metering pump (rpm) | 19.7 | 19.7 | 19.7 | 19.7 | 19.7 | 19.7 | 19.7 | 19.7 | 19.7 |
| Thruput (lbs/hr) | 2.97 | 2.97 | 2.97 | 2.97 | 2.97 | 2.97 | 2.97 | 2.97 | 2.97 |
| Thruput (kg/hr) | 1.35 | 1.35 | 1.35 | 1.35 | 1.35 | 1.35 | 1.35 | 1.35 | 1.35 |
| POLYMER TYPE | 135 10% Lactam | 135 10% Lactam | 135 10% Lactam | 135 10% Lactam | 135 10% Lactam | 135 10% Lactam | 135 10% Lactam | 195 | 195 10% Lactam |
| Filter type | STD SCREEN | STD SCREEN | STD SCREEN | STD SCREEN | STD SCREEN | STD SCREEN | STD SCREEN | STD SCREEN | STD SCREEN |
| Quench air Flow rate (CF/M) | 15.2 | 14.9 | 14.5 | 14.4 | 14.9 | 14 | 14.2 | 14.6 | 14.8 |
| Quench air Temp. (deg. c) | 20.1 | 19.5 | 18.7 | 19 | 18.9 | 19.1 | 18.7 | 18.9 | 19.5 |
| Quench air Humidity % | 39.4 | 40.7 | 39.7 | 40.1 | 41.3 | 38.7 | 39.1 | 96.8 | 39.1 |
| % Torque | 39 | 38 | 40 | 37 | 39 | 40 | 42 | 52 | 38 |
| Nitrogen in Hoper | 3 | 3 | 3 | 3 | 3 | 3 | 3 | 3 | 3 |

**Table 5**

| Sample I.D. | #27 | #28 | #29 | #30 |
|---|---|---|---|---|
| POLYMER TYPE | 193 10% Lactam | 195 10% Lactam | 195 10% Lactam | 195 10% Lactam |
| Feeder setting | 2.96 | 2.96 | 2.96 | 2.96 |
| Date | 10/24/02 | 10/24/02 | 10/24/02 | 10/24/02 |
| water on feeding zone | on | on | on | on |
| zone 1 Temp. (deg c) | 285/270 | 280/286 | 275/263 | 270/258 |
| zone 2 Temp. (deg c) | 285 | 280 | 275 | 270 |
| zone 3 Temp. (deg c) | 285 | 280 | 275 | 270 |
| zone 4 Temp. (deg c) | 285 | 280 | 275 | 270 |
| zone 5 Temp. (deg c) | 285 | 280 | 275 | 270 |
| zone 6 Temp. (deg c) | 285 | 280 | 275 | 270 |
| zone 7 Temp. (deg c) | 285 | 280 | 275 | 270 |
| 8 Connecting Plate Temp. (deg. C) | 285 | 280 | 275 | 270 |
| 9 Block Temp. (deg.C) | 285 | 280 | 215 | 270 |
| 10 Spin Pump Temp. (deg.C) | 285 | 280 | 275 | 270 |
| 11 Top Cap (deg.C) | 285 | 280 | 275 | 270 |
| 12 Spin Pack Temp. (deg.C) | 285 | 280 | 275 | 270 |
| Barrel Melt Temp. (deg. c) | 298 | 289 | 284 | 279 |
| Melt Pump Inlet Pressure (psi) | 1250 | 50 | 860 | 1080 |
| Melt Pump Inlet Pressure (MPa) | 8.62 | 0.34 | 5.93 | 7.44 |
| Melt Pump Outlet Pressure (psi) | 860 | 890 | 970 | 1100 |
| Melt Pump Outlet Pressure (MPa) | 5.93 | 6.14 | 6.69 | 7.58 |
| Extruder (rpm) | 200 | 200 | 200 | 200 |
| Spinneret: no. of holes / Shape | 14 R | 14 R | 14 R | 14 R |
| Spinneret: capillary diameter & depth | .024 X 0.072 | .024 X 0.072 | .024 X 0.072 | .024 X 0.072 |
| Metering pump size (cc/rev) | 1.16 | 1.16 | 1.16 | 1.16 |
| Metering pump (rpm) | 19.7 | 19.7 | 19.7 | 19.7 |
| Thruput (lbs/hr) | 2.97 | 2.97 | 2.97 | 2.97 |
| Thruput (kg/hr) | 1.35 | 1.35 | 1.35 | 1.35 |
| Filter type | STD SCREEN | STD SCREEN | STD SCREEN | STD SCREEN |
| Monomer Exhaust Reading (inches water) | open | open | open | open |
| POLYMER TYPE | 193 10% Lactam | 195 10% Lactam | 195 10% Lactam | 195 10% Lactam |
| Feeder setting | 2.96 | 2.96 | 2.96 | 2.96 |
| Quench air Flow rate (CF/M) | 14.7 | 14.7 | 14.2 | 13.9 |
| Quench air Temp. (deg. c) | 19.2 | 19.7 | 20 | 18.7 |
| Quench air Humidity % | 46.1 | 41.5 | 43.1 | 39.4 |
| % Torque | 41 | 28 | 37 | 41 |
| Nitrogen in Hoper | 3 | 3 | 3 | 3 |

## Claims

1. A method of forming a gel-spun fiber, the method consisting of the following steps:
(a) providing nylon-6 and caprolactam;
(b) reacting the caprolactam with the nylon-6 to form a pre-fiber nylon/caprolactam gel composition; and
(c) spinning said pre-fiber nylon/caprolactam gel composition on a twin-screw extruder fiber spinning machine to form a gel-spun fiber;
wherein reacting step (b) comprises mixing the caprolactam with the nylon-6; and wherein the amount of caprolactam is 5 to 40 wt.% of the gel composition.

2. The method of claim 1, wherein the caprolactam is present in an amount of 5 wt.% in the pre-fiber gel composition.

3. The method of claim 1, wherein the caprolactam is present in an amount of 10 wt.% in the pre-fiber gel composition.

4. The method of claim 1, wherein the caprolactam is present in an amount of 15 wt.% in the pre-fiber gel composition.

5. The method of claim 1, wherein the caprolactam is present in an amount of 20 wt.% in the pre-fiber gel composition.

6. The method of claim 1, wherein the caprolactam is present in an amount of 30 wt.% in the pre-fiber gel composition.

7. The method of claim 1, wherein the caprolactam is present in an amount of 40 wt.% in the pre-fiber gel composition.

8. The method of any preceding claim, wherein reacting step (b) takes place in a Braybender mixer at a speed of 60 RPM.

## Patentansprüche

1. Verfahren zur Bildung einer nach dem Gelspinnverfahren ersponnenen Faser, wobei das Verfahren aus den folgenden Schritten besteht:
(a) Bereitstellen von Nylon-6 und Caprolactam;
(b) Umsetzen des Caprolactams mit dem Nylon-6 zur Bildung einer Vorfaser-Nylon/Caprolactam-Gelzusammensetzung; und
(c) Spinnen der Vorfaser-Nylon/Caprolactam-Gelzusammensetzung auf einer Doppelschneckenextruder-Faserspinnmaschine zur Bildung einer nach dem Gelspinnverfahren ersponnenen Faser;
wobei der Umsetzungsschritt (b) das Mischen des Caprolactams mit dem Nylon-6 umfasst und
wobei die Menge an Caprolactam 5 bis 40 Gew.-% der Gelzusammensetzung beträgt.

2. Verfahren nach Anspruch 1, wobei das Caprolactam in der Vorfaser-Gelzusammensetzung in einer Menge von 5 Gew.-% vorliegt.

3. Verfahren nach Anspruch 1, wobei das Caprolactam in der Vorfaser-Gelzusammensetzung in einer Menge von 10 Gew.-% vorliegt.

4. Verfahren nach Anspruch 1, wobei das Caprolactam in der Vorfaser-Gelzusammensetzung in einer Menge von 15 Gew.-% vorliegt.

5. Verfahren nach Anspruch 1, wobei das Caprolactam in der Vorfaser-Gelzusammensetzung in einer Menge von 20 Gew.-% vorliegt.

6. Verfahren nach Anspruch 1, wobei das Caprolactam in der Vorfaser-Gelzusammensetzung in einer Menge von 30 Gew.-% vorliegt.

7. Verfahren nach Anspruch 1, wobei das Caprolactam in der Vorfaser-Gelzusammensetzung in einer Menge von 40 Gew.-% vorliegt.

8. Verfahren nach einem der vorhergehenden Ansprüche, bei dem der Umsetzungsschritt (b) in einem Braybender-Mischer bei einer Geschwindigkeit von 60 U/min erfolgt.

## Revendications

1. Procédé de formation d'une fibre filée à l'état de gel, le procédé étant constitué des étapes suivantes :
(a) la fourniture de nylon-6 et de caprolactame ;
(b) la réaction du caprolactame avec le nylon-6 pour former une composition de gel de nylon/caprolactame de pré-fibre ; et
(c) le filage de ladite composition de gel de nylon/caprolactame de pré-fibre sur une machine de filage de fibre de type extrudeuse à deux vis pour former une fibre filée à l'état de gel ;
dans lequel l'étape de réaction (b) comprend le mélange du caprolactame avec le nylon-6 ; et
dans lequel la quantité de caprolactame est de 5 à 40 % en poids de la composition de gel.

2. Procédé selon la revendication 1, dans lequel le caprolactame est présent en une quantité de 5 % en poids dans la composition de gel de pré-fibre.

3. Procédé selon la revendication 1, dans lequel le caprolactame est présent en une quantité de 10 % en poids dans la composition de gel de pré-fibre.

4. Procédé selon la revendication 1, dans lequel le caprolactame est présent en une quantité de 15 % en poids dans la composition de gel de pré-fibre.

5. Procédé selon la revendication 1, dans lequel le caprolactame est présent en une quantité de 20 % en poids dans la composition de gel de pré-fibre.

6. Procédé selon la revendication 1, dans lequel le caprolactame est présent en une quantité de 30 % en poids dans la composition de gel de pré-fibre.

7. Procédé selon la revendication 1, dans lequel le caprolactame est présent en une quantité de 40 % en poids dans la composition de gel de pré-fibre.

8. Procédé selon une quelconque revendication précédente, dans lequel l'étape de réaction (b) a lieu dans un mélangeur Braybender à une vitesse de 60 tr/min.
